# EUROPEAN PATENT APPLICATION

(11) **EP 1 752 429 A1**
(43) Date of publication of application: **14.02.2007**
(21) Application number: 05425543.5
(22) Date of filing: 25.07.2005
(51) Int. Cl.: C04B 28/02, C04B 41/50

(54) **Bituminous road surface with a photocatalytic effect and a procedure for the preparation of said road surface**

(71) Applicant: Global Engineering and Trade S.r.L., 20123 Milano (IT)
(72) Inventor: Terruzzi, Claudio, Via Camperio, 9, 20123 Milano (IT)
(74) Representative: Lunati, Vittoriano

(57) **Abstract**

A procedure is designed for the preparation of a photocatalytic bituminous road surface consisting of a stage involving the preparation of a bituminous base (2) with a thickness coming between 10 mm and 60 mm and containing gaps (5), and a subsequent stage for spreading a cement mortar (7) over said bituminous base (2), containing: a photocatalytic material for achieving a photocatalytic reaction, a plasticizing admixture suitable for fluidifying said mortar, (7), and amorphous silicon dioxide suitable for making said mortar (7) more compact, said cement mortar (7) thus being suitable for coating the gaps (5) in said bituminous base (2).

## Description

The present invention relates to a bituminous road surface with a photocatalytic effect and a procedure for the preparation of said road surface, of the type described in the preamble of the first claim.

A known photocatalytic process enables the oxidation of polluting and contaminating substances.

The photocatalytic process is based on the use of electric charges, or electrons, provided by suitable semiconductors when the latter are excited by suitable electromagnetic waves.

A preferred semiconductor for activating the photocatalytic process is titanium dioxide (TiO₂), preferably in the form of anatase.

The electrons made available by the titanium dioxide give rise to a negative electric charge that easily binds to other molecules occurring in the environment. To be more precise, it binds to the molecules of atmospheric oxygen (O₂), giving rise to negative ions (O₂⁻ or O⁻).

These ions O₂⁻ and O⁻ are highly reactive and bind to the molecules of pollutants occurring in the environment, particularly nitrogen oxides (NOₓ), which are mainly nitrogen monoxide and dioxide (NO or NO₂) - thus forming negative ions NO₃⁻, or carbon monoxide (CO) - giving rise to a molecule of carbon dioxide CO₂.

When photocatalytic substances are placed in an alkaline cement matrix, the negative ions (NO₃⁻) easily bind to the positive calcium or sodium ions (Ca⁺⁺ or Na⁺) dissociated from the compounds (calcium carbonate, gypsum, ...) occurring in the alkaline cement matrix.

This last step is of fundamental importance, because it prevents the production of acids at the end of the photocatalytic process, producing harmless salts instead, such as calcium nitrate Ca(NO₃)₂ and sodium nitrate NaNO₃, which precipitate in the environment.

The photocatalytic process can oxidize not only nitrogen and carbon oxides, but also many other harmful substances, such as: benzene, toluene, ethyl benzene, m-xylene, ozone, sulfur dioxide, formaldehyde, acetaldehyde, PM x, methanol, and ethanol.

Various experiments have been conducted to assess the abatement of nitrogen oxides and other pollutants obtained by coating roads or walls with a photocatalytic surface layer, recording up to 62% reductions in these pollutants.

Said experiments have nonetheless identified certain important drawbacks.

In fact, to achieve all the above-mentioned advantages, the photocatalytic substances must be incorporated in an alkaline base, such as cement and mortar, otherwise, the NO₃⁻ negative ions fail to bind with the calcium or sodium positive ions (Ca⁺⁺ or Na⁺) occurring in the alkaline cement matrix and thus give rise to hazardous acids at the end of the photocatalytic process.

Alkaline base materials are not always available on roads, which are generally made of bituminous mixtures, not cement-based mixtures.

Bituminous mixtures very often contain amines. The conversion to nitroso of the nitrogen dioxide when it combines with the amines gives rise to nitrosamines.

Various solutions have consequently been suggested that involve covering the bituminous road surface with a cement-based top coating.

Such a solution enables cement road surfaces to be obtained on top of the bituminous surfaces.

There is evidence, however, that mortars and cements cannot assure a satisfactory mechanical behavior when they are cast over a layer of bituminous mixture.

In fact, these different types of material - bituminous and cement-based - have very different moduli of elasticity and mechanical features; in particular, mortars and cements are far more rigid than the underlying bituminous layer. As a result, the bituminous foundation layer fails to support the overlying cement reliably when the latter (which usually forms a slender layer) is submitted to heavy loads, induced by trucks for instance. The lack of support and consequent bending of the concrete layer becomes manifest in the form of surface cracking.

Alternatively, the layer of cement could be made thicker and stronger, but this would considerably increase the related costs and construction times.

Tests have also been conducted that involve coating the top of the bituminous road surface with a paint or like product containing photocatalytic substances.

This solution is far less expensive and quicker to apply, but the top of a bituminous road surface is known to last for a very limited amount of time because of the wear and tear induced by the passage of the various types of vehicle. Using such a procedure can only obtain a road surface with a short-lived photocatalytic effect.

Moreover, photocatalytic paint reacts with the organic compounds in the bituminous road surface, causing their degradation and a consequent loss of adhesion.

Given this situation, the technical aim behind the present invention is to design a bituminous road surface with a photocatalytic effect and a procedure for the preparation of said road surface capable of substantially overcoming the above-mentioned drawbacks.

Within said technical aim, an important aim of the invention is to design a road surface with a photocatalytic effect that has the mechanical features of a bituminous asphalt and the chemical advantages of alkaline base materials.

Another important aim of the invention is to design a road surface with a photocatalytic effect at a very limited cost.

A further aim is to design a road course that is highly durable.

The technical aim and stated objects are achieved by a road surface with a photocatalytic effect as claimed in the attached Claim 1.

Preferred embodiments are identified in the dependent claims.

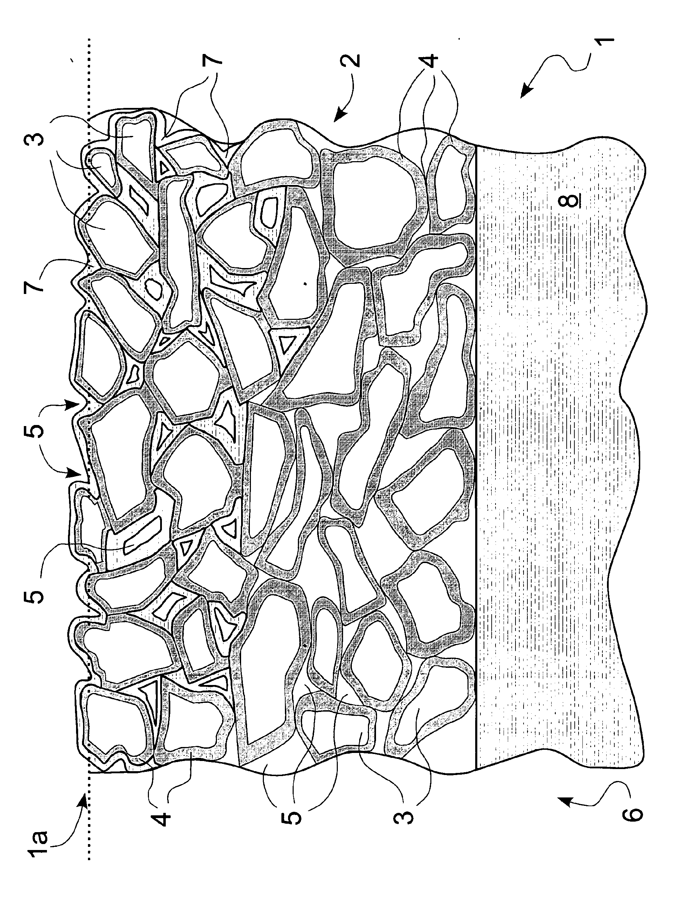

Further features and advantages of the invention are better explained below in a detailed description of a preferred embodiment of the invention, with reference to the attached drawings, wherein:
**the sole figure** schematically shows a portion of road surface according to the invention.

With reference to the aforesaid figure, the bituminous road surface according to the invention is globally indicated by the numeral **1.**

The road surface 1 defines an outer surface **1a** of a road course **6** suitable for enabling the passage of motor vehicles, trucks and the like.

Said bituminous road surface 1 consists of a bituminous base **2,** of known type with a thickness substantially coming between 10 mm and 60 mm.

Said bituminous base 2 is made of aggregate **3** and bitumen **4,** which acts as the binder of said aggregate 3.

The aggregate 3 and bitumen or binder 4 do not completely fill the space occupied by the bituminous base 2, i.e. a far from negligible proportion of said space is occupied by gaps **5** within the bituminous base 2.

The bituminous base 2 is also preferably of the internally draining type, so it has a considerable proportion of cavities and an aggregate 3 of large dimensions, i.e. more than 40% of the aggregate 3 is preferably larger than 10 mm.

Moreover, said aggregate 3 is preferably obtained by crushing and consequently has an irregular shape, thus ensuring that the aggregate does not become compact, but retains a high percentage of gaps 5.

In fact, said gaps 5 preferably occur in a proportion coming between 10% and 30% of said bituminous base 2.

The bituminous base 2 only forms the outermost layer of the road course 6, which may comprise further layers of bituminous mixture, crushed stone and other materials, schematically indicated by the numeral 8.

The gaps 5 in the bituminous base 2 that lie at a distance of 1 to 40 mm from said outer surface 1a, are finely and evenly coated with a cement mortar **7.**

Cement mortars are known to be composed mainly of water, aggregate (substantially consisting of sand) and a binder, which is cement in the case of cement mortars. The mortar may also contain numerous different types of admixture.

The cement mortar 7 has a photocatalytic effect because it contains a photocatalytic material in w/w proportions coming between 2.0% and 5.0% of said mortar.

Said photocatalytic material is preferably titanium dioxide and, better still, in the form of anatase.

The cement mortar 7 also includes a plasticizing admixture, in w/w proportions coming between 1% and 4%.

Said plasticizing admixture is designed to fluidify the mortar and preferably consists of a melamine resin, such as MELMENT^{®} F10, manufactured by Degussa Construction Polymers GmbH, and is preferably used in powder form.

The cement mortar 7 also includes amorphous silicon dioxide in w/w proportions coming between 5% and 15% of the mortar 7.

Said amorphous silicon dioxide is contained in an admixture for mortars and cement called Silica Fume, which is preferably used for the present mortar 7.

Said admixture enables a marked, up to two-fold increase in the strength of cements and mortars.

This is thanks to the limited dimensions of the silicon particles (which are two orders of magnitude smaller than the particles comprising the cement) and to the considerable reactivity of silicon dioxide with the various components of the mortar 7. Silica fume is manufactured, for instance, by the Norwegian company Elkem.

The mortar 7 also preferably contains a water retaining admixture.

The water-retaining admixture reduces the tendency of the water to evaporate while the cement mortar 7 is setting.

Any such evaporation is detrimental for mortars and cements in general, and for the present mixture in particular because, as it evaporates, the water volatilizes the lighter-weight substances, i.e. the titanium dioxide, and brings other substances occurring in the cement, such as the calcium carbonates and the like, to the surface, which have a screening effect on the photocatalytic action of the titanium dioxide or other photocatalyst involved.

The water-retaining admixture is preferably a cellulose ether that retains the water by increasing the viscosity of the fluid, and is added to the mortar 7 in w/w quantities coming between 0.1 % and 0.4%.

A suitable water-retaining admixture, for instance, is manufactured by Hercules and goes by the name of Culminal Mhec 6000 PR.

The mortar 7 also preferably includes glass fibers, which are preferably made of alkali-resistant glass, added in proportions coming between 1 % and 3% w/w of the mortar 7.

To be more precise, said fibers are made of alkali-resistant glass with a high zirconium oxide (ZrO₂) content, capable of withstanding the corrosive effects of alkalis and assuring excellent mechanical features.

These fibers preferably have a mean diameter of 12 - 14 µm and are preferably between 3 mm and 20 mm in length.

The glass fibers assure the mortar 7 a superior mechanical strength and prevent any formation of cracks while the mortar is setting.

Glass fibers of this type are manufactured, for instance, by Vetrorex Saint-Gobain and go by the name of cem-fil^{®} or micro fiberglass^{®}.

Numerous other known admixtures can be added to the mortar 7, e.g. to improve its bonding qualities or workability, or to increase the density of the mortar 7, so as to prevent it from percolating in depth.

Coloring pigments can also be added, such as certain iron oxides or the like. An example of the ingredients in a mortar 7 is given in the table below.

| Product | Manufacturer | Type | Quantity |
|---|---|---|---|
| BASIC INGREDIENTS | | | |
| GX Millennium | Italcementi | Cement | 20.0% |
| TX Millennium white Cern. 52,5 | Italcementi | Cement | 20.0% |
| Sataf 113 silica sand | Sataf | Aggregate | 36.0% |
| Sataf 11 71F silica sand | Sataf | Aggregate | 24.0% |

| ADMIXTURES | | | |
|---|---|---|---|
| PC105 Titanium dioxide | Millenium ch. | TiO₂ | 2.5% |
| PC 500 Titanium dioxide | Millenium ch | TiO₂ | 0.8% |
| Silica fume Elkem 940 U | Elkem | SiO₂ | 10.0% |
| Melment F1O | Neuchem | Plasticizer | 2.0% |
| Elotex AP 200 -. | Hercules | Super-plasticizer | 4.0% |
| Culminal MHEC 6000 PR | Hercules | Water retainer | 0.3% |
| Amylotex 8100 | Hercules | Stabilizer | 0.3% |
| Black iron oxide | Siof | Coloring agent | 0.5% |
| Micro fiberglass | Sant-Gobain | Glass fibers | 1.5% |

In the table, the w/w percentages are calculated on the basis of the weight of the basic ingredients alone (i.e. aggregate and cement). The previously-described chemical and physical features of the mortar 7 enable it to evenly coat the gaps 5 without completely filling them.

To be more precise, the flowability of the mortar 7, imparted by the plasticizing admixture, enables it to percolate into the gaps 5 in the bituminous base instead of remaining on the surface. As a result, the photocatalytic mortar 7 remains in place even after the asphalt top layer of the bituminous course has worn away.

Moreover, the compact and homogeneous nature of the mortar 7, thanks to the amorphous silicon dioxide or Silica Fume achieves the desirable effect of ensuring that the photocatalytic reaction always takes place in the presence of alkaline cement substances.

In fact, the surface 1a and the adjacent areas are homogeneously covered with cement mortar 7.

The invention comprises a new procedure for the preparation of a bituminous road surface 1 with a photocatalytic effect.

Said procedure comprises a known stage for the preparation of a bituminous base 2, as described previously.

Said bituminous base 2 is preferably of the internally draining type.

The procedure according to the invention also involves a subsequent stage for spreading the outer surface 1 a of said bituminous base 2 with a cement mortar 7 of the type previously described.

Said spreading operation is done manually or mechanically using known methods.

The cement mortar 7 flows inside the bituminous base 2 and lines the gaps 5 in said bituminous base 2, coating them evenly and compactly, without completely filling the gaps 5, in fact, approximately 20% of the volume of said gaps is occupied.

This result is achieved thanks to the chemical and physical properties of the mortar 7, and particularly thanks to the addition of plasticizing admixtures and silicon dioxide or Silica Fume, as explained previously.

The mortar 7 coats the bituminous layer down to a depth coming between 1 mm and 40 mm, depending on the strength and durability required of the road surface in question.

Preferably, approximately 3 kg of mortar 7 are used per square meter of outer surface 1 a.

The spreading procedure can be implemented on a specifically-prepared bituminous base 2.

In this case, an internally draining bituminous base 2 is preferably prepared in lieu of, or in addition to a previous road course or the like.

Alternatively, the spreading can be done over a bituminous base 2 already laid on the road course 6.

The invention also comprises a new use of a mortar 7 of the type described.

Said use involves the mortar 7 being spread substantially in the same manner as a paint over a bituminous base 2 which forms the outer surface 1 a of a road course 6.

Three kg of mortar 7 are preferably used per m² of surface area 1 a being treated.

The invention offers important advantages.

In fact, the mortar 7 adheres to the gaps 5 in the bituminous base 2.

The photocatalytic reactions consequently always take place in the vicinity of the areas coated with mortar 7, so the negative ions that form in the photocatalytic process can bind to the alkalis in the mortar 7, thus giving rise to harmless salts.

A further advantage derives from the fact that the mortar 7 forms an extremely thin, compact layer, and is consequently not liable to rupture or cracking, since the strength and mechanical behavior of the road course 6 is substantially defined by the bituminous base 2.

Another advantage lies in that the photocatalytic effect of the road course 6 remains despite wear on the top layer of the road surface 1, because the mortar 7 containing the photocatalytic substances is not simply spread over the surface 1a, but also penetrates into the gaps 5 in the bituminous base 2.

The photocatalytic effects consequently persist throughout the working life of the road surface 1.

A further advantage stems from the fact that only a small quantity of mortar 7, and consequently also of photocatalytic substances, is needed to cover a wide area of bituminous base 2, which consequently retains its internal draining properties.

The marked reduction in the amount of photocatalytic substances needed also means a considerable economic saving. In particular, the quantity of TiO₂ per m² of road surface 1, can be reduced more than tenfold by comparison with the amount of TiO₂ needed to achieve a road surface made entirely of photocatalytic cement.

## Claims

1. Procedure for the preparation of a photocatalytic bituminous road surface of the type defining the outer surface (1 a) of a road course (6) consisting of a stage for the preparation of a bituminous base (2) with gaps (5), near the surface at least, and **characterized in that** it comprises: a subsequent stage for spreading said outer surface (1a) with a cement mortar (7) consisting of: a photocatalytic material, suitable for achieving a photocatalytic reaction, in w/w proportions coming between 2.0% and 5.0% of said mortar (7), a plasticizing admixture, suitable for fluidifying said mortar (7), in w/w proportions coming between 1% and 4% of said mortar (7), and amorphous silicon dioxide, suitable for making said mortar more compact, in w/w proportions coming between 5% and 15% of said mortar (7), said cement mortar being suitable for coating said gaps (5) in said bituminous base (2) down to a depth of at least 1 mm, and lining said gaps (5) in said bituminous base (2).

2. Procedure according to claim 1, wherein said spreading stage involves the use of 3 kg of said mortar (7) per m² of surface area of said bituminous base (2).

3. Photocatalytic bituminous road surface of the type defining an outer surface (1a) of the road course (6), consisting of: a bituminous base (2) with a thickness coming between 10 mm and 60 mm and containing gaps (5) near the surface at least, and **characterized in that**: said gaps (5) are coated, down to a depth of at least 1 mm, with a cement mortar (7) containing: a photocatalytic material, suitable for achieving photocatalytic reactions, in w/w proportions coming between 2.0% and 5.0% of said mortar (7), a plasticizing admixture, suitable for fluidifying said mortar (7), in w/w proportions coming between 1% and 4% of said mortar (7), and amorphous silicon dioxide, suitable for making said mortar compact, in w/w proportions coming between 5% and 15% of said mortar (7).

4. Road surface according to claim 3, wherein said bituminous base (2) is of the internally draining type.

5. Road surface according to claim 3, wherein said amorphous silicon is in the form of Silica Fume.

6. Road surface according to claim 3, wherein said plasticizing admixture is a melamine resin.

7. Road surface according to claim 3, including a water retaining admixture.

8. Road surface according to claim 7, wherein said water retaining admixture consists of a cellulose ether.

9. Road surface according to claim 3, containing alkali-resistant glass fibers.

10. Use of a photocatalytic mortar (10) for spreading over a bituminous base (2) of internally draining type that forms the surface (1a) of a road course (6).

## Amended claims

### Amended claims in accordance with Rule 86(2) EPC.

**1.** Use of a photocatalytic mortar (7) for spreading over a bituminous base (2) of internally draining type that forms the surface (1a) of a road course (6), said photocatalytic mortar (7) containing: a photocatalytic material, suitable for achieving photocatalytic reactions, in w/w proportions coming between 2.0% and 5.0% of said mortar (7), a melamine resin, suitable for fluidifying said mortar (7), in w/w proportions coming between 1% and 4% of said mortar (7), and amorphous silicon dioxide, suitable for making said mortar compact, in w/w proportions coming between 5% and 15% of said mortar (7).

**2.** Use according to claim 1, wherein said water retaining admixture consists of a cellulose ether in w/w quantities coming between 0.1% and 0.4% of said mortar (7).

**3.** Use according to claim 1, containing alkali-resistant glass fibers in proportions coming between 1% and 3% w/w of said mortar (7).

**4.** Use according to claim 1, wherein said plasticizing admixture comprehend a substance (Elotex^{®} AP200) based on a copolymer of vinyl acetate, vinyl versatate and butyl acrylate in w/w quantities of approximately 4%.

**5.** Use according to claim 1, wherein are spread approximately 3 kg of said mortar (7) per m² of surface area of said bituminous base (2).

**6.** Use according to claim 1, wherein said bituminous base (2) of internally draining type comprehends gaps (5) in a volumetric proportion coming between 10% and 30% of said bituminous base (2).

**7.** Use according to claim 1, wherein said bituminous base (2) comprehends an aggregate (3) and wherein more than 40% of said aggregate (3) is preferably larger than 10 mm.

**8.** Photocatalytic bituminous road surface of the type defining an outer surface (1a) of the road course (6), consisting of: a bituminous base (2), of the internally draining type, with a thickness coming between 10 mm and 60 mm and containing gaps (5) near the surface at least, and **characterized in that**: said gaps (5) from the surface (1a) down to a depth of at least 1 mm, are finely coated with a cement mortar (7) containing: a photocatalytic material, suitable for achieving photocatalytic reactions, in w/w proportions coming between 2.0% and 5.0% of said mortar (7), plasticizing admixtures_suitable for fluidifying said mortar (7) and comprehending a melamine resin in w/w proportions coming between 1% and 4% of said mortar (7), and amorphous silicon dioxide, suitable for making said mortar compact, in w/w proportions coming between 5% and 15% of said mortar (7).

**9.** Procedure for the preparation of a photocatalytic bituminous road surface of the type defining the outer surface (1a) of a road course (6) consisting of a stage for the preparation of a bituminous base, of the internally draining type, (2) with gaps (5), near the surface at least, and **characterized in that** it comprises: a subsequent stage for spreading said outer surface (1a) with a cement mortar (7) consisting of: a photocatalytic material, suitable for achieving a photocatalytic reaction, in w/w proportions coming between 2.0% and 5.0% of said mortar (7), plasticizing admixtures suitable for fluidifying said mortar (7) and comprehending a melamine resin in w/w proportions coming between 1% and 4% of said mortar (7), and amorphous silicon dioxide, suitable for making said mortar more compact, in w/w proportions coming between 5% and 15% of said mortar (7), said cement mortar being suitable for coating said gaps (5) in said bituminous base (2) down to a depth of at least 1 mm, and lining said gaps (5) in said bituminous base (2).
